# FASCICULE DE BREVET EUROPEEN

(11) **EP 2 966 599 B1**
(45) Date de publication et mention de la délivrance du brevet: **21.12.2016**
(21) Numéro de dépôt: 15306077.7
(22) Date de dépôt: 02.07.2015
(51) Int. Cl.: G06K 19/077, G09F 3/08, B28B 23/00, H05K 5/06

(54) **DISPOSITIF POUR L'IDENTIFICATION D'UN ÉLÉMENT EN BÉTON**
VORRICHTUNG ZUM IDENTIFIZIEREN EINES ELEMENTS AUS BETON
DEVICE FOR IDENTIFYING A CONCRETE ELEMENT

(30) Priorité: 11.07.2014 FR 1456752
(43) Date de publication de la demande: 13.01.2016
(73) Titulaire: Bonna Sabla, 92800 Puteaux (FR)
(72) Inventeur: Dumontier, Amaury, 92800 PUTEAUX (FR); Bernard, Simon, 92800 PUTEAUX (FR)
(74) Mandataire: Jacobacci Coralis Harle

(56) Documents cités:
- WO-A1-2004/000679
- WO-A1-2009/038661

## Description

La présente invention concerne le domaine du génie civil. Elle concerne plus précisément les dispositifs pour l'identification d'éléments en béton aux fins notamment de leur traçabilité/suivi.

### ARRIERE-PLAN TECHNOLOGIQUE

Les éléments en béton, et en particulier ceux préfabriqués, sont couramment utilisés dans les constructions civiles.

De tels éléments en béton peuvent consister par exemple en des voussoirs pour le soutènement de voûtes de tunnels ou de métro.

Ces éléments en béton sont souvent préfabriqués au sein d'une usine, pour être ensuite transportés jusqu'à leur site d'implantation.

La traçabilité de ces éléments en béton constitue alors un enjeu majeur, notamment pour faciliter leur construction, leur inspection, leur implantation (les données collectées peuvent concerner par exemple les plans ou calepinage ; ces données sont utiles dans le cadre de la pose et/ou de la mise en place de l'élément en béton), leur suivi et/ou leur maintenance.

Le document WO-2009/038661 propose une solution pour la traçabilité de tels éléments en béton, s'appuyant sur la technologie dite de radio-identification. La solution proposée utilise un dispositif d'identification comportant un boîtier destiné à être partiellement noyé dans le béton et dans lequel sont rapportés des moyens de radio-identification munis d'une puce radio-communicante.

Ce boîtier comporte en particulier deux parois entre lesquels sont implantés les moyens de radio-identification :
- une paroi avant, destinée à affleurer la surface de l'élément en béton, et
- une paroi arrière munie de moyens d'ancrage destinés à être noyés dans cet élément en béton.

Pour prévenir une infiltration de béton dans le boîtier au moment de son implantation, l'étanchéité entre les parois de boîtier est assurée par un assemblage du type soudure, par exemple une soudure ultrasonique ou une soudure à chaud.

Toutefois, ce dispositif d'identification n'est pas totalement satisfaisant.

En effet, la solidarisation par soudage est relativement complexe à mettre en oeuvre et elle ne garantit pas une étanchéité optimale du boîtier sur tout son pourtour.

Il existe également un risque significatif d'une désolidarisation de la paroi avant par rapport à la paroi arrière ancrée dans l'élément en béton, avec le risque de perte des moyens de radio-identification qui en découle.

La mise en oeuvre d'une opération de soudage constituerait un surcoût de fabrication.

### OBJET DE L'INVENTION

Dans ce contexte, on propose selon l'invention une nouvelle structure pour un dispositif d'identification destiné à équiper un élément en béton, dont l'étanchéité du boîtier est assurée d'une manière simple et efficace.

Le dispositif d'identification correspondant comprend :
a/ des moyens de radio-identification comprenant un support portant une puce radio-communicante, et
b/ un boîtier comportant :
   b1/ deux parois en regard, l'une avant et l'autre arrière, munies chacune d'une face intérieure entre lesquelles sont rapportés lesdits moyens de radio-identification, et
   b2/ des moyens d'ancrage qui sont adaptés à être noyés dans ledit élément en béton, pour la solidarisation entre ledit dispositif d'identification et ledit élément en béton.

Et conformément à l'invention :
- ledit support des moyens de radio-identification comprend une plaquette support qui est réalisée dans un matériau élastomère, et
- le dispositif d'identification comporte encore des moyens d'étanchéité ménagés entre lesdites faces intérieures dudit boîtier et ladite plaquette support des moyens de radio-identification, pour former un joint étanche par compression qui est apte à empêcher le passage de fluides entre lesdites faces intérieures dudit boîtier et ladite plaquette support des moyens de radio-identification.

Une telle structure permet, de manière simple et rapide, une étanchéité optimale qui évite notamment une infiltration de la laitance du béton entre les faces intérieures du boîtier et la plaquette support des moyens de radio-identification.

Cet avantage est en particulier important lorsqu'il est envisagé de pouvoir visualiser des informations inscrites sur la plaquette.

Selon d'autres caractéristiques techniques avantageuses, pouvant être prises en combinaison ou indépendamment les unes des autres :
- les moyens d'étanchéité sont formés par une nervure périphérique ménagée sur l'une au moins des faces intérieures du boîtier ;
- la paroi avant est transparente et une face avant de la plaquette support, plaquée contre la face intérieure de ladite paroi avant, comporte des signes optiquement visibles (code à barres, numéro, instructions, etc.) ;
- les moyens d'ancrage du boîtier comportent une embase arrière qui s'étend du côté de la paroi arrière et qui a une forme divergente pour permettre l'empilement des dispositifs d'identification en une colonne stable et compact pour leur stockage empilé avant utilisation (la compacité permet en particulier de réduire l'encombrement, pour limiter les coûts d'emballage, de conditionnement, etc. dans le cadre de leur transport et de leur stockage) ; dans ce cadre, l'embase arrière comporte de préférence au moins un ergot s'étendant latéralement et destiné à participer à un ancrage dans l'élément en béton ; encore de préférence, le ou les ergots comportent chacun une ouverture traversante, lesquelles ouvertures traversantes sont destinés à être alignés avec des boîtiers empilés pour recevoir des tiges de maintien de la colonne ;
- la paroi avant est monobloc avec les moyens d'ancrage dans l'élément en béton ;
- les parois avant et arrière sont solidarisées ensemble par le biais de moyens de solidarisation par emboîtement élastique ;
- la paroi avant du boîtier comporte des moyens de fixation dégradables, pour l'assemblage amovible dudit dispositif d'identification avec une surface intérieure d'un moule de fabrication de l'élément en béton.

La présente invention concerne également l'élément en béton équipé d'un dispositif d'identification selon l'invention, dans lequel le boîtier est noyé partiellement dans ledit élément en béton, avec sa paroi avant affleurant la surface dudit élément en béton.

Cet élément en béton consiste par exemple en un voussoir pour un tunnel.

La présente invention concerne également un procédé pour la fabrication d'un élément en béton selon l'invention, lequel procédé comprend les étapes suivantes :
- une étape de fourniture d'un moule comportant une surface intérieure destinée à définir la surface dudit élément en béton,
- une étape de dépose du dispositif d'identification dans ledit moule, de sorte que la paroi avant dudit dispositif d'identification vient en appui contre la surface intérieure dudit moule,
- une étape de coulage du béton dans ledit moule, éventuellement avec vibration dudit moule,
- une étape éventuelle d'étuvage (avantageusement un étuvage humide), et
- une étape de dissociation entre, d'une part, ledit moule et, d'autre part, l'élément en béton solidifié portant ledit dispositif d'identification.

### DESCRIPTION DETAILLEE DE L'INVENTION

La présente invention sera encore illustrée, sans être aucunement limitée, par la description suivante d'un mode de réalisation particulier en relation avec les figures annexées dans lesquelles :
- la figure 1 est une vue générale et en perspective du dispositif d'identification selon l'invention, avant son implantation dans l'élément en béton ;
- la figure 2 est une vue en coupe du dispositif d'identification selon la figure 1, selon un plan de coupe longitudinale ;
- la figure 3 est une vue agrandie du détail III de la figure 2, montrant les moyens d'étanchéité ;
- la figure 4 est une vue de dessous de la paroi avant du dispositif d'identification, duquel ont été dissociés la paroi arrière et les moyens de radio-identification ;
- la figure 5 est une vue de dessus de la paroi arrière du boîtier, dissociée de la paroi avant ;
- la figure 6 est une vue isolée et en perspective des moyens de radio-identification destinés à équiper le boîtier (les indications visuelles sont représentées ici schématiquement dans un souci de simplification) ;
- la figure 7 montre deux dispositifs d'identification superposés en colonne, représentés avec un plan de coupe longitudinale ;
- les figures 8 et 9 illustrent les principales étapes du procédé pour l'implantation du dispositif d'identification dans un élément en béton.

Le dispositif d'identification 1 selon l'invention est destiné à permettre l'identification d'un élément en béton, cela au moins par la technologie de radio-identification (ou « RFID » pour « Radio Frequency Identification »).

Cette identification des éléments en béton est notamment utile aux fins de la traçabilité et du suivi de ces derniers.

Par « éléments en béton », on entend en particulier des éléments en béton préfabriqués, éventuellement en béton armé.

De tels élément en béton consistent par exemple en un voussoir en béton armé pour le soutènement de la voute d'un tunnel (par exemple pour le métro).

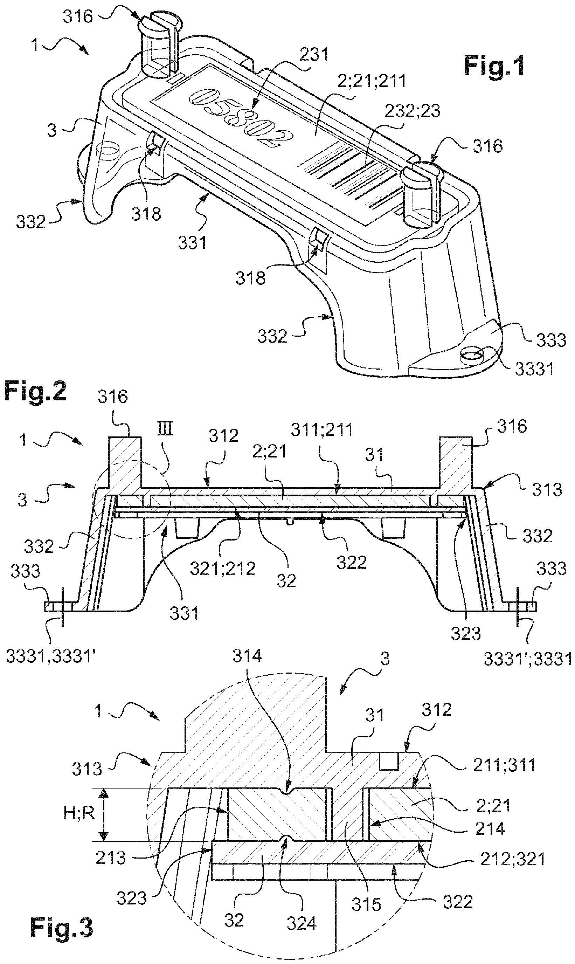

Pour cela, tel que représenté notamment sur les figures 1 à 3, le dispositif d'identification 1 selon l'invention comprend des moyens de radio-identification 2 qui sont rapportés de manière étanche dans un boîtier 3 destiné à être noyé (ou pris) partiellement dans l'élément en béton à identifier.

Les moyens de radio-identification 2 intègrent la fonction de radio-identification.

Par « radio-identification », on entend en particulier une technique qui permet d'identifier et de suivre des objets au moyen d'un radio-identifiant. On entend encore une technique qui permet d'identifier des objets en utilisant une puce mémoire ou un dispositif électronique capable de stocker des informations et, à l'aide d'une antenne radio, de transmettre ces informations à un lecteur spécialisé.

Ces moyens de radio-identification 2 se rencontrent également sous le nom de « tag », ou « label » ou encore « transpondeur ».

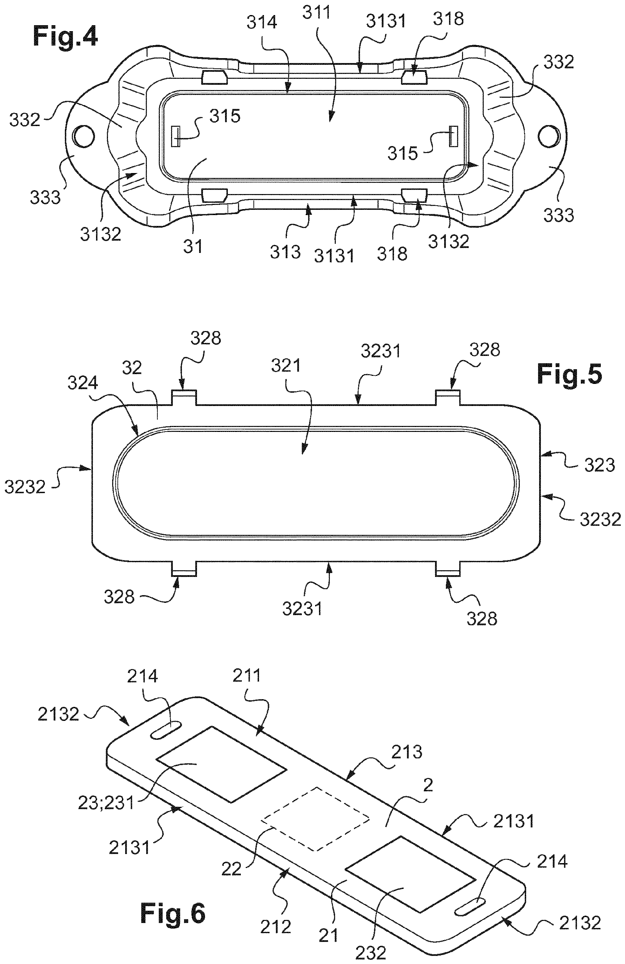

Les moyens de radio-identification 2, représentés de manière isolée sur la figure 6, comprennent ainsi un support 21 portant une puce radio-communicante 22.

Le support 21 consiste ici en une plaquette support qui est réalisée dans un matériau élastomère.

Par « matériau élastomère », on entend en particulier un matériau présentant une haute élasticité et qui, même si il est étiré fortement et de façon répétée, retrouve approximativement sa longueur initiale aussitôt que cesse la tension.

Par exemple, ce matériau élastomère est choisi parmi le silicone souple, intéressant pour ses qualités de résistance aux chocs, à la vibration, au pliage et à la température d'étuvage.

Le support 21, en l'espèce parallélépipédique mince, comprend :
- une face supérieure 211, comportant en l'espèce des signes optiquement visibles 23 (représentés schématiquement sur la figure 6),
- une face inférieure 212, opposée à ladite face supérieure 211, et
- une bordure périphérique 213, de forme générale rectangulaire.

Les faces supérieure 211 et inférieure 212 sont ici planes, et elles sont ménagées parallèlement l'une par rapport à l'autre.

Les signes optiquement visibles 23 de la face supérieure 211 consistent par exemple en des signes optiques d'identification qui se composent d'un numéro 231 et d'un code-barres 232.

La bordure périphérique 213 comprend quant à elles deux bordures longitudinales 2131 et deux bordures transversales 2132.

Le support 21 est encore muni de deux orifices traversants 214, destinés à coopérer avec des plots complémentaires du boîtier 3 (figure 3), pour optimiser le positionnement dudit support 21 lors de son montage.

Chaque orifice traversant 214 est ménagé à proximité de l'une des deux bordures transversales 2132 du support 21.

La puce radio-communicante 22, classique en soi, est emprisonnée dans le support 21 pour assurer sa protection à l'encontre notamment des chocs mécaniques et des fluides.

Une telle puce radio-communicante 22 consiste avantageusement en une puce électronique (ou circuit intégré) associée à une antenne.

Cette puce radio-communicante 22 est par exemple passive, c'est-à-dire que la puce électronique rétromodule l'onde issue d'un lecteur pour transmettre des informations. Le « tag » passif utilise généralement l'onde (magnétique ou électromagnétique) issue du lecteur pour alimenter le circuit électronique embarqué.

De préférence, la puce radio-communicante 22 est choisie parmi :
- les puces électroniques du type HF (Haute Fréquence), fonctionnant à une fréquence de 13,56 MHz, ou
- les puces électroniques du type UHF (Ultra Haute Fréquence), fonctionnant à une fréquence de l'ordre de 860 à 950 MHz.

Les puces du type HF présentent en particulier l'intérêt d'être détectables à une distance limitée, généralement de l'ordre de quelques centimètres, ce qui permet de les identifier unitairement. Les puces du type UHF présentent en particulier l'intérêt d'être détectables à une distance plus grande, généralement plusieurs mètres, ce qui permet de les identifier par groupe.

Cette puce radio-communicante 22 contient avantageusement un identifiant unique, choisi par exemple parmi « UII » pour « Unique Item Identifier » ou « Code EPC » pour « Electronic Product Code », qui est renvoyé en réponse à une requête radio émise depuis un lecteur émetteur-récepteur.

Cet identifiant unique est avantageusement non-modifiable, et consiste typiquement en un code numérique ou alphanumérique.

Cet identifiant unique est de préférence identique à celui représenté par (codé dans) les signes optiques d'identification 23 apposés sur la face supérieure 211 du support 21. Cette redondance est utile pour sécuriser l'identifiant par différentes technologies.

Un tel identifiant unique peut être enregistré dans une base de données, pour permettre son appairage avec d'autres données utiles au suivi de l'élément en béton destiné à porter le dispositif d'identification 1.

La puce radio-communicante 22 peut ainsi être du type :
- « WORM » pour « Write Once, Read Multiple », ou
- « MTP » pour « Multi Time Programmable », c'est-à-dire comportant une zone mémoire (par exemple EEPROM) accessible en lecture et en écriture.

De manière à protéger les moyens de radio-identification 2, et en particulier pour préserver l'accès visuel aux signes optiques d'identification 23, le boîtier 3 est structuré pour encapsuler/envelopper ces moyens de radio-identification 2 tout en assurant leur ancrage dans l'élément en béton.

A cet effet, comme illustré sur les figures 2 et 3, le boîtier 3 comporte deux parois 31, 32 qui s'étendent en regard et à distance l'une de l'autre pour prendre en sandwich les moyens de radio-identification 2.

En particulier, le boîtier 3 comporte :
- une paroi avant 31, destinée à venir en position affleurante de l'élément en béton à identifier, et
- une paroi arrière 32, destinée à s'étendre du côté de l'élément en béton.

La paroi avant 31 est avantageusement transparente, pour accéder visuellement aux signes optiques d'identification 23 apposés sur la face supérieure 211 du support 21 des moyens de radio-identification 2.

Les deux parois 31, 32 ont chacune la forme d'une platine rectangulaire, comportant :
- une face intérieure 311, 321, destinée à venir en regard de la face intérieure 311, 321 de l'autre paroi 31, 32 du boîtier (figures 2 et 3),
- une face extérieure 312, 322, libre, opposée à ladite face intérieure 311, 321 (figures 2 et 3), et
- une bordure périphérique 313, 323, de forme générale rectangulaire (figures 2 à 5).

Les bordures périphérique 313, 323 des parois 31, 32 sont identiques, ou quasi identiques, l'une par rapport à l'autre.

En particulier, ces bordures périphériques 313, 323 comprennent chacune deux bordures longitudinales 3131, 3231 et deux bordures transversales 3132, 3232.

Les faces intérieures 311, 321 des parois 31, 32 du boîtier 3 pincent ainsi entre elles le support 21 des moyens de radio-identification 2.

En l'espèce, le support 21 est orienté dans le boîtier 3 de sorte que :
- sa face supérieure 211 est plaquée contre la face intérieure 311 de la paroi avant 31 du boîtier 3, et
- sa face inférieure 212 est plaquée contre la face intérieure 321 de la paroi arrière 32 du boîtier 3.

Des moyens d'étanchéité sont ménagés entre les faces intérieures 311, 321 du boîtier 3 et le support 21 des moyens de radio-identification 2, pour former un joint étanche par compression qui est apte à empêcher le passage de fluide (notamment de béton) entre lesdites faces intérieures 311, 321 et le support 21 rapporté.

Les moyens d'étanchéité sont ici formés par deux nervures périphériques 314, 324 qui sont ménagées, respectivement, sur les faces intérieures 311, 321 en regard des parois 31, 32 du boîtier 3.

En l'espèce, ces nervures périphériques 314, 324 ont une forme générale rectangulaire.

Elles sont ménagées de manière à s'étendre, au moins approximativement, en regard l'une de l'autre et à suivre approximativement la bordure périphérique 213 du support 21 (figure 3).

Pour générer le joint étanche par compression, la hauteur H séparant les faces intérieures 311, 321 des parois 31, 32 du boîtier 3 est avantageusement identique, au jeu près, à l'épaisseur R du support 21 (c'est-à-dire la distance séparant ses deux faces 211, 212) (figure 3).

De manière générale, la hauteur H est choisie pour obtenir une compression optimale du support 21, sans toutefois le détériorer.

Les nervures périphériques 314, 324, saillantes par rapport aux faces intérieures 311, 321 des parois 31, 32, viennent ainsi s'enfoncer dans le support 21 du fait de son élasticité.

Par ailleurs, comme visible sur les figures 2 à 4, la paroi avant 31 est ici monobloc avec des moyens d'ancrage 33 dans l'élément en béton.

Les moyens d'ancrage 33 consistent ici une embase arrière qui s'étend du côté de la face arrière 311 de la paroi avant 31 (ou le cas échéant du côté de la paroi arrière 32) et qui est raccordée à sa bordure périphérique 313.

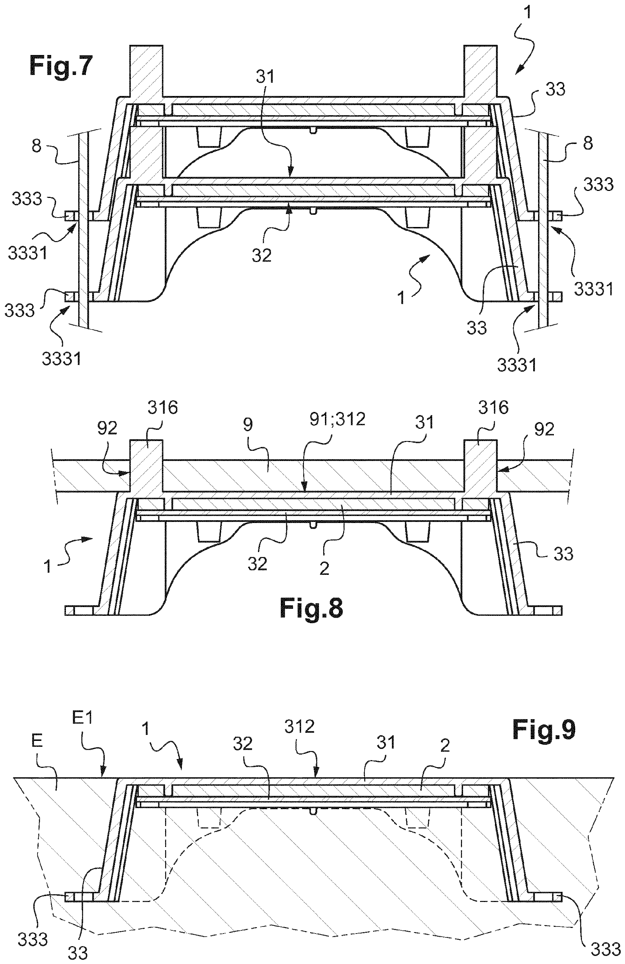

Ces moyens d'ancrage 33 sont ici divergents (c'est-à-dire une embase arrière 33 dont la section augmente avec la distance par rapport à la paroi avant 31), pour leur gerbage tel que décrit ci-après en relation avec la figure 7.

Dans l'exemple illustré, les moyens d'ancrage 33 comprennent une jupe 331, raccordée à la bordure périphérique 313 de la paroi avant 31, qui est prolongée par deux pattes d'extrémité 332 terminées chacune par un ergot 333.

Les deux pattes d'extrémité 332 sont ménagées dans le prolongement des bordures transversales 3132 de la paroi avant 31 et s'écartent l'une par rapport à l'autre, depuis la paroi avant 31.

Les ergots 333 s'étendent dans un même plan, et parallèlement au plan général de la paroi avant 31. Chacun des ergots 333 comporte une ouverture traversante 3331 définissant un axe longitudinal traversant 3331'. Les axes longitudinaux traversants 3331' des ergots 333 s'étendent parallèlement l'un par rapport à l'autre et perpendiculairement au plan général de la paroi avant 31 (figure 2).

La face intérieure 311 de la paroi avant 31 est encore munie de deux plots latéraux monoblocs 315 qui sont destinés chacun à s'insérer au travers de l'un des orifices traversantes 214 du support 21 des moyens de radio-identification 2.

Ces plots latéraux monoblocs 315 servent au positionnement du support 21, avant l'application de la paroi arrière 32.

La face extérieure 312 de cette même paroi avant 31 est encore équipée de moyens de fixation dégradables 316, servant à l'assemblage de ce dispositif d'identification 1 avec un moule de fabrication de l'élément en béton (comme décrit ci-après en relation avec la figure 8).

Ces moyens de fixation dégradables 316 consistent ici en deux structures de tenons prévues chacune pour être introduites par emboîtement élastique (ou clipsage) dans un orifice de réception complémentaire ménagé dans le moule.

Les parois avant 31 et arrière 32 sont ici assemblées par le biais de moyens de solidarisation par emboîtement élastique.

En l'occurrence, la bordure périphérique 323 de la paroi arrière 32 est munie d'un ensemble d'ergots 328 (formant tenon), répartis le long de ses bordures longitudinales 3231 (figure 5).

De son côté, la jupe 331 de la paroi avant 31 est quant à elle munie de logements complémentaires 318 (formant mortaise) qui sont ménagés le long des deux bordures longitudinales 3131 de la bordure périphérique 313 de la paroi avant 31 (figure 4).

Le boîtier 3 comporte un ergot de détrompage, utile pour orienter convenablement ce boîtier 3 dans le moule par une orientation visuelle constante.

En pratique, le dispositif d'identification 1 est obtenu, tout d'abord, par la dépose des moyens de radio-identification 2 contre la paroi avant 31 du boîtier 3.

Le support 21 est rapporté de sorte que sa face avant 211 soit orientée en regard de la face intérieure 311 de la paroi avant 31 du boîtier 3.

Cette dépose s'accompagne d'une insertion des plots latéraux 315 de la paroi avant 31 au travers des orifices traversants 214 du support 21 (figure 3).

La paroi arrière 32 du boîtier 3 est ensuite rapportée sur la paroi avant 31, contre le support 21, pour activer les moyens de solidarisation par emboîtement élastique 318, 328.

Cette paroi arrière 32 est pour cela rapportée de sorte que sa face intérieure 321 vienne en regard de la face inférieure 212 du support 21 des moyens de radio-identification 2.

Les moyens de radio-identification 2 sont ainsi enveloppés de manière étanche entre les deux parois 31, 32 du boîtier 3.

Pour rappel, l'étanchéité est ici assurée par les nervures périphériques 314, 324 des faces intérieures 311, 321 en regard des parois 31, 32 du boîtier 3, qui s'enfoncent chacune au sein des faces 211, 212 du support 21 des moyens de radio-identification 2.

Ces nervures périphériques 314, 324 délimitent un périmètre qui entoure la puce radio-communicante 22 et les signes optiquement visibles 23 de la face supérieure 211 du support 21.

Les nervures périphériques 314, 324 des faces intérieures 311, 321 forment ainsi deux joints étanches par compression, avec les faces 211, 212 du support 21 des moyens de radio-identification 2, qui sont aptes à empêcher le passage de fluides.

Les dispositifs d'identification 1 ainsi obtenus peuvent être stockés en colonne (figure 7), cela en particulier grâce à la forme évasée de leurs moyens d'ancrage 33.

Pour cela, chaque dispositif d'identification 1 est orienté de sorte que ses moyens d'ancrage 33 recouvrent la paroi supérieure 31 et les moyens d'ancrage 33 du dispositif d'identification 1 directement sous-jacent.

Des tiges de maintien 8 peuvent être rapportées dans les ouvertures traversantes 3331 alignées, permettant un stockage et un transport ergonomiques.

L'implantation du dispositif d'identification 1 dans un élément en béton est décrite ci-dessous en relation avec les figures 8 et 9.

Le dispositif d'identification 1 est tout d'abord déposé dans un moule 9 qui comporte une surface intérieure 91 destinée à définir la surface de l'élément en béton E.

Par exemple, la surface intérieure 91 du moule 9 est destinée à définir la surface d'un élément en béton E du type voussoir.

Ce moule 9 est pour cela pourvu de percements ad-hoc 92 pour l'assemblage par emboîtement élastique des moyens de fixation dégradables 316 équipant la paroi avant 31 du dispositif d'identification 1 (figure 8).

La face extérieure 312 de la paroi avant 31 est ainsi plaquée contre la surface intérieure 91 du moule 9, pour limiter le passage de béton entre elles lors de l'étape ultérieure de coulage.

La paroi arrière 32 et les moyens d'ancrage 33 de ce dispositif d'identification 1 sont libres au sein de moule 9.

Si nécessaire, des armatures aciers sont convenablement rapportées dans le moule 9.

Il est ensuite mis en oeuvre une étape de coulage du béton dans le moule 9, avec vibration éventuelle de ce dernier pour la mise en place du béton (la vibration est possible pendant le coulage ou juste après).

Le béton s'écoule alors autour des moyens d'ancrage 33 du dispositif d'identification 1, et vient épouser sa paroi arrière 32, pour assurer leur prise dans le béton solidifié.

Lors de ces étapes de coulage (éventuellement avec vibration) et/ou d'étuvage, les moyens d'étanchéité 314, 324 du dispositif d'identification 1 évitent que de la laitance issue du béton ne s'infiltre entre les parois 31, 32 du boîtier 3 et les moyens de radio-identification 2.

Ce phénomène d'infiltration conduirait en particulier à affecter la visibilité des signes optiques d'identification 23 portés par le support 21 des moyens de radio-identification 2.

Le boîtier 3 est également suffisamment robuste en cas d'étuvage à haute température (plus de 70 °C) avec vapeur humide.

Ce boîtier 3 maintient notamment les éléments suivants :
- la fonction de radio-identification,
- son intégrité physique,
- sa lisibilité.

Après solidification du béton, l'élément en béton E portant le dispositif d'identification 1 est démoulé du moule 9 (figure 9).

Les moyens de fixation dégradables 316 peuvent être coupés et jetés.

La paroi avant 31 du dispositif d'identification 1 (et en particulier sa face extérieure 312) est ainsi affleurante par rapport à la surface E1 de l'élément en béton E (figure 9).

De plus, les moyens de radio-identification 2 sont efficacement solidarisés avec l'élément en béton E puisqu'ils sont emprisonnés entre, d'une part, la paroi avant 31 dont les moyens d'ancrage 33 sont pris dans le béton et, d'autre part, la paroi arrière 32 recouverte par le béton.

L'élément en béton E peut ainsi être suivi tout au long de sa vie par le biais de son dispositif d'identification 1 partiellement noyé dans sa matière, ce qui le protège en plus des agressions extérieures.

Les moyens de radio-identification 2 et les signes optiques d'identification 23 peuvent alors être lus sans difficultés au travers de la paroi avant 31 du boîtier 3, pour le suivi de cet élément en béton E préfabriqué.

Ce dispositif d'identification 1 peut être lu par le biais de différentes technologies, en l'occurrence une technologie de radio-identification et/ou une technologie optique (par exemple code à barres et/ou visuelle directe).

Cette lecture peut s'effectuer par exemple au moyen d'un lecteur fixe ou au moyen d'une gâchette manuelle, relié à un réseau.

Le dispositif d'identification 1 selon l'invention présente, de manière générale, différents avantages :
- une insertion d'une puce de radio-identification dans la masse de l'élément en béton,
- une maîtrise de la position finale du dispositif de radio-identification,
- une robustesse face aux vibrations, à la température d'étuvage, et aux chocs,
- une protection des risques d'interférence électromagnétique des aciers,
- une double protection étanche de la puce radio-communicante (au sein de son support et du boîtier).

## Revendications

1. Dispositif pour l'identification d'un élément en béton, lequel dispositif d'identification (1) comprend :
a/ des moyens de radio-identification (2) comprenant un support (21) portant une puce radio-communicante (22), et
b/ un boîtier (3) comportant :
b1/ deux parois (31, 32) en regard, l'une avant (31) et l'autre arrière (32), munies chacune d'une face intérieure (311, 321) entre lesquelles sont rapportés lesdits moyens de radio-identification (2), et
b2/ des moyens d'ancrage (33) qui sont adaptés à être noyés dans ledit élément en béton, pour la solidarisation entre ledit dispositif d'identification (1) et ledit élément en béton,
**caractérisé en ce que** ledit support (21) des moyens de radio-identification (2) comprend une plaquette support (21) qui est réalisée dans un matériau élastomère, et
**en ce qu'**il comporte des moyens d'étanchéité (314, 324) ménagés entre lesdites faces intérieures (311, 321) dudit boîtier (3) et ladite plaquette support (21) des moyens de radio-identification (2), pour former un joint étanche par compression qui est apte à empêcher le passage de fluides entre lesdites faces intérieures (311, 321) dudit boîtier (3) et ladite plaquette support (21) des moyens de radio-identification (2).

2. Dispositif pour l'identification d'un élément en béton, selon la revendication 1, **caractérisé en ce que** les moyens d'étanchéité (314, 324) sont formés par une nervure périphérique (314, 324) ménagée sur l'une au moins des faces intérieures (311, 321) du boîtier (3).

3. Dispositif pour l'identification d'un élément en béton, selon l'une quelconque des revendications 1 et 2, **caractérisé en ce que** la paroi avant (31) est transparente et **en ce qu'**une face avant (211) de la plaquette support (21), plaquée contre la face intérieure (311) de ladite paroi avant (31), comporte des signes optiquement visibles (23).

4. Dispositif pour l'identification d'un élément en béton, selon l'une quelconque des revendications 1 à 3, **caractérisé en ce que** les moyens d'ancrage (33) du boîtier (3) comportent une embase arrière (33) qui s'étend du côté de la paroi arrière (32) et qui a une forme divergente pour permettre l'empilement des dispositifs d'identification (1) en une colonne stable.

5. Dispositif pour l'identification d'un élément en béton, selon la revendication 4, **caractérisé en ce que** l'embase arrière (33) comporte au moins un ergot (333) s'étendant latéralement et destiné à participer à un ancrage dans l'élément en béton.

6. Dispositif pour l'identification d'un élément en béton, selon la revendication 5, **caractérisé en ce que** ledit au moins un ergot (333) comporte une ouverture traversante (3331) destinée à être alignée avec celles de boîtiers (3) empilés pour recevoir des tiges de maintien (8) de la colonne.

7. Dispositif pour l'identification d'un élément en béton, selon l'une quelconque des revendications 1 à 6, **caractérisé en ce que** la paroi avant (31) est monobloc avec les moyens d'ancrage (33) dans l'élément en béton.

8. Dispositif pour l'identification d'un élément en béton, selon l'une quelconque des revendications 1 à 7, **caractérisé en ce que** les parois avant (31) et arrière (32) sont solidarisées ensemble par le biais de moyens (318, 328) de solidarisation par emboîtement élastique.

9. Dispositif pour l'identification d'un élément en béton, selon l'une quelconque des revendications 1 à 8, **caractérisé en ce que** la paroi avant (31) du boîtier (3) comporte des moyens de fixation dégradables (316) pour l'assemblage amovible dudit dispositif d'identification (1) avec une surface intérieure (91) d'un moule (9) pour la fabrication de l'élément en béton.

10. Elément en béton, équipé d'un dispositif d'identification (1) selon l'une quelconque des revendications 1 à 9, dans lequel le boîtier (3) est noyé partiellement dans ledit élément en béton (E) de sorte que sa paroi avant (31) affleure la surface (E1) dudit élément en béton (E).

11. Elément en béton, selon la revendication 10, **caractérisé en ce qu'**il consiste en un voussoir.

12. Procédé pour la fabrication d'un élément en béton (E) selon l'une quelconque des revendications 10 ou 11, **caractérisé en ce qu'**il comprend les étapes suivantes :
- une étape de fourniture d'un moule (9) comportant une surface intérieure (91) destinée à définir la surface (E1) dudit élément en béton (E),
- une étape de dépose du dispositif d'identification (1) dans ledit moule (9), de sorte que la paroi avant (31) dudit dispositif d'identification (1) vient en appui contre la surface intérieure (91) dudit moule (9),
- une étape de coulage du béton dans ledit moule (9),
- une étape éventuelle d'étuvage, et
- une étape de dissociation entre, d'une part, ledit moule (9) et, d'autre part, l'élément en béton (E) solidifié portant ledit dispositif d'identification (1).

## Patentansprüche

1. Vorrichtung zum Identifizieren eines Elements aus Beton, welchselbige Identitizierungsvorrichtung (1)
a) Mittel zur Identifizierung per Funk (2) mit einer einen Funkidentifizierungschip (22) tragenden Unterlage (21) und
b) ein Gehäuse (3), das
b1) zwei gegenüberliegende Wandungen (31, 32), und zwar eine vordere (31) und eine hintere (32), aufweist, von denen jede eine Innenseite (311, 321) hat, zwischen die die Mittel zur Identifizierung per Funk (2) eingebracht sind, und
b2) Mittel zur Verankerung (33) aufweist, die dazu ausgelegt sind, zwecks einer festen Verbindung zwischen der Identifizierungsvorrichtung (1) und dem Element aus Beton im Element aus Beton versenkt zu sein,
aufweist,
**dadurch gekennzeichnet, daß** die Unterlage (21) der Mittel zur Identifizierung per Funk (2) eine Trägerplatte (21) aufweist, die aus einem elastomeren Material gefertigt ist, und
daß sie Dichtmittel (314, 324) aufweist, die zwischen den Innenseiten (311, 321) des Gehäuses (3) und der Trägerplatte (21) der Mittel zur Identifizierung per Funk (2) angeordnet sind, um eine durch Druck dichte Dichtung zu bilden, die geeignet ist, den Durchgang von Fluiden zwischen den Innenseiten (311, 321) des Gehäuses (3) und der Trägerplatte (21) der Mittel zur Identifizierung per Funk (2) zu verhindern.

2. Vorrichtung zum Identifizieren eines Elements aus Beton gemäß Anspruch 1, **dadurch gekennzeichnet, daß** die Dichtmittel (314, 324) aus einer umlaufenden Rippe (314, 324) bestehen, die wenigstens auf einer der Innenseiten (311, 321) des Gehäuses (3) angeordnet ist.

3. Vorrichtung zum Identifizieren eines Elements aus Beton gemäß einem der Ansprüche 1 und 2, **dadurch gekennzeichnet, daß** die vordere Wandung (31) durchsichtig ist und daß eine Vorderseite (211) der gegen die Innenseite (311) der vorderen Wandung (31) gedrückten Trägerplatte (21) optisch sichtbare Zeichen (23) aufweist.

4. Vorrichtung zum Identifizieren eines Elements aus Beton gemäß einem der Ansprüche 1 bis 3, **dadurch gekennzeichnet, daß** die Verankerungsmittel (33) des Gehäuses (3) einen hinteren Sockel (33) aufweisen, der sich auf der Seite der hinteren Wandung (32) erstreckt und der eine auseinanderlaufende Form aufweist, um eine Stapelung der Identifizierungsvorrichtungen (1) in Form einer stabilen Säule zu ermöglichen.

5. Vorrichtung zum Identifizieren eines Elements aus Beton gemäß Anspruch 4, **dadurch gekennzeichnet, daß** der hintere Sockel (33) wenigstens eine sich seitlich erstreckende Auskragung (333) aufweist, die dazu bestimmt ist, bei einer Verankerung im Element aus Beton mitzuwirken.

6. Vorrichtung zum Identifizieren eines Elements aus Beton gemäß Anspruch 5, **dadurch gekennzeichnet, daß** die wenigstens eine Auskragung (333) eine Durchgangsöffnung (3331) aufweist, die dazu bestimmt ist, mit jenen von aufeinander gestapelten Gehäusen (3) ausgerichtet zu sein, um Stützstäbe (8) der Säule aufzunehmen.

7. Vorrichtung zum Identifizieren eines Elements aus Beton gemäß einem der Ansprüche 1 bis 6, **dadurch gekennzeichnet, daß** die vordere Wandung (31) mit den Mitteln (33) zum Verankern im Element aus Beton einstückig ist.

8. Vorrichtung zum Identifizieren eines Elements aus Beton gemäß einem der Ansprüche 1 bis 7, **dadurch gekennzeichnet, daß** die vordere Wandung (31) und die hintere Wandung (32) durch Mittel (318, 328) zum festen Verbinden mittels elastischen Ineinandergreifens fest miteinander verbunden sind.

9. Vorrichtung zum Identifizieren eines Elements aus Beton gemäß einem der Ansprüche 1 bis 8, **dadurch gekennzeichnet, daß** die vordere Wandung (31) des Gehäuses (3) sich zersetzende Befestigungsmittel (316) zum trennbaren Zusammenfügen der Identifizierungsvorrichtung (1) mit einer inneren Oberfläche (91) einer Form (9) für die Herstellung des Elements aus Beton aufweist.

10. Element aus Beton, das mit einer Vorrichtung zum Identifizieren (1) gemäß einem der Ansprüche 1 bis 9 ausgestattet ist, bei dem das Gehäuse (3) teilweise im Element aus Beton (E) so versenkt ist, daß seine vordere Wandung (31) mit der Oberfläche (E1) des Elements aus Beton bündig ist.

11. Element aus Beton gemäß Anspruch 10, **dadurch gekennzeichnet, daß** es ein Gewölbeelement ist.

12. Verfahren zum Herstellen eines Elements aus Beton (E) gemäß einem der Ansprüche 10 oder 11, **dadurch gekennzeichnet, daß** es folgende Schritte aufweist:
einen Schritt des Bereitstellens einer Form (9) mit einer inneren Oberfläche (91), die dazu bestimmt ist, die Oberfläche (E1) des Elements aus Beton (E) zu definieren,
einen Schritt des Hineinlegens der Identifizierungsvorrichtung (1) in die Form (9) dergestalt, daß die vordere Wandung (31) der Identifizierungsvorrichtung (1) an der inneren Oberfläche (91) der Form (9) in Anlage kommt,
einen Schritt des Gießens des Betons in die Form (9),
einen eventuellen Schritt der Wärmebehandlung und
einen Schritt des Trennens der Form (9) einerseits vom Element aus Beton (E), das die Identifizierungsvonichtung (1) aufweist, andererseits.

## Claims

1. Device for identification of a concrete element, wherein said identification device (1) comprising:
a/ radio-identification means (2) comprising a support (21) carrying a radio-communication chip (22), and
b/ a casing (3) including:
b1/ two opposite walls (31, 32), a front one (31) and a rear one (32), each provided with an internal face (311, 321) between which said radio-identification means (2) are added, and
b2/ anchoring means (33), which are adapted to be embedded in said concrete element, for the fastening between said identification device (1) and said concrete element,
**characterized in that** said support (21) of the radio-identification means (2) comprises a support plate (21) that is made of an elastomeric material, and
**in that** it includes sealing means (314, 324) arranged between said internal faces (311, 321) of said casing (3) and said support plate (21) of the radio-identification means (2), to form a compression seal that is adapted to prevent the passage of fluids between said internal faces (311, 321) of said casing (3) and said support plate (21) of the radio-identification means (2).

2. Device for identification of a concrete element according to claim 1, **characterized in that** the sealing means (314, 324) are formed by a peripheral rib (314, 324) arranged on one at least of the internal faces (311, 321) of the casing (3).

3. Device for identification of a concrete element according to any one of claims 1 and 2, **characterized in that** the front wall (31) is transparent and **in that** a front face (211) of the support plate (21), applied against the internal face (311) of said front wall (31), includes optically visible signs (23).

4. Device for identification of a concrete element according to any one of claims 1 to 3, **characterized in that** the anchoring means (33) of the casing (3) include a rear base (33) that extends on the side of the rear wall (32) and that has a diverging shape to allow the stacking of the identification devices (1) into a stable column.

5. Device for identification of a concrete element according to claim 4, **characterized in that** the rear base (33) includes at least one snug (333) extending laterally and intended to participate to an anchoring in the concrete element.

6. Device for identification of a concrete element according to claim 5, **characterized in that** said at least one snug (333) includes a through-opening (3331) intended to be aligned with those of stacked casings (3) to receive rods (8) for the holding of the column.

7. Device for identification of a concrete element according to any one of claims 1 to 6, **characterized in that** the front wall (31) is made single-piece with the anchoring means (33) in the concrete element.

8. Device for identification of a concrete element according to any one of claims 1 to 7, **characterized in that** the front (31) and rear (32) walls are fastened together through snap fastening means (318, 328).

9. Device for identification of a concrete element according to any one of claims 1 to 8, **characterized in that** the front wall (31) of the casing (3) includes degradable fixation means (316) for the detachable connection of said identification device (1) to an internal surface (91) of a mould (9) for the manufacturing of the concrete element.

10. A concrete element equipped with an identification device (1) according to any one of claims 1 to 9, wherein the casing (3) is partially embedded in said concrete element (E) so that the front wall (31) thereof levels with the surface (E1) of said concrete element (E).

11. The concrete element according to claim 10, **characterized in that** it consists in a voussoir.

12. A method for manufacturing a concrete element (E) according to any one of claims 10 or 11, **characterized in that** it comprises the following steps:
- a step of providing a mould (9) including an internal surface (91) intended to define the surface (E1) of said concrete element (E),
- a step of placing the identification device (1) in said mould (9), so that the front wall (31) of said identification device (1) bears against the internal surface (91) of said mould (9),
- a step of pouring concrete into said mould (9),
- a possible step of stoving, and
- a step of dissociating from each other, on the one hand, said mould (9), and on the other hand, the solidified concrete element (E) carrying said identification device (1).
